# EUROPEAN PATENT APPLICATION

(11) **EP 1 927 948 A1**
(43) Date of publication of application: **04.06.2008**
(21) Application number: 07115068.4
(22) Date of filing: 28.08.2007
(51) Int. Cl.: G06T 1/00

(54) **Apparatus and method for embedding data into image, and computer program**

(30) Priority: 28.11.2006 JP 2006320666
(71) Applicant: Fujitsu Ltd., Kawasaki-shi, Kanagawa 211-8588 (JP)
(72) Inventor: Moroo, Jun, Kanagawa 211-8588 (JP); Noda, Tsugio, Kanagawa 259-1331 (JP)
(74) Representative: Stebbing, Timothy Charles

(57) **Abstract**

In a data embedding apparatus according to the present invention, a code calculating unit extracts a feature quantity from the image and calculates a code by using extracted feature quantity and a code embedding unit embeds calculated code into the image. An embedding determining unit that determines whether the code has been embedded normally into the image. If the embedding determining unit determines that the code has not been embedded normally into the image, an image-feature-quantity modifying unit modifies the extracted feature quantity. Finally, the code calculating unit extracts a new feature quantity from the image based on modified feature quantity, and recalculates a code by using the new feature quantity. The present invention enables data to be reliably embedded into an image selected by a user, regardless of the characteristic of the image.

## Description

The present invention relates to a technology for embedding data into an image, and relates to a material that includes embedded data.

A technology to embed data into an image such as digital data or a printed material is being developed for preventing falsification and unauthorized use and for providing additional services. The image, which includes embedded data, is used as a user interface and for asserting rights. Further, various methods have been proposed for embedding data into the image.

However, a method that enables data to be embedded into all images does not exist. If data cannot be embedded into an image, a method is proposed to discard the image as an image that cannot be subjected to embedding of data. Alternatively, a method disclosed in Japanese Patent Application Laid-open No. 2005-117154 embeds (adds) data to the effect that data cannot be embedded.

However, in a conventional technology disclosed in Japanese Patent Application Laid-open No. 2005-117154, sometimes, data cannot be (sufficiently) embedded in an image due to image characteristics, and even if a user desires embedding of data, the embedding of data cannot be carried out.

The user carries out embedding of data into the image for various reasons. Accordingly, discarding the image on the grounds that data cannot be embedded or simply embedding (adding) data to the effect that data cannot be embedded, amounts to unnecessarily neglecting social, political, and legal reasons that make the user carry out embedding of data. Thus, enabling to embed as much data as possible into the image selected by the user is desirable.

Thus, there is a need of a technology that enables data to be reliably embedded into an image selected by the user regardless of the characteristics of the image.

It is desirable to at least partially solve the problems in the conventional technology.

According to an aspect of the present invention, there is provided a data embedding apparatus that embeds data into an image, the data embedding apparatus comprising: a code calculating unit that extracts a feature quantity from the image and calculates a code by using the extracted feature quantity; a code embedding unit that embeds the calculated code into the image; an embedding determining unit that determines whether the code has been embedded normally into the image; an image-feature-quantity modifying unit that modifies the extracted feature quantity upon the embedding determining unit determining that the code has not been embedded normally into the image, wherein the code calculating unit extracts a new feature quantity from the image based on the modified feature quantity, and recalculates a code by using the new feature quantity.

According to another aspect of the present invention, there is provided a method of embedding data into an image, the method of embedding data comprising: extracting a feature quantity from the image; calculating a code by using the extracted feature quantity; embedding calculated code into the image; determining whether the code has been embedded normally into the image; modifying the extracted feature quantity upon it being determined that the code has not been embedded normally into the image; extracting a new feature quantity from the image based on the modified feature quantity; and recalculating a code by using the new feature quantity.

According to still another aspect of the present invention, a computer program causes a computer to implement the above method. The program may be stored on a computer-readable medium.

The above and other features, advantages and technical and industrial significance of this invention will be better understood by reading the following detailed description of presently preferred embodiments of the invention, when considered in connection with the accompanying drawings, of which:
Fig. 1 is a schematic for explaining an overview and a salient feature of an embodiment of the present invention;
Fig. 2 is a schematic of block split image data;
Fig. 3 is a functional block diagram of a data embedding apparatus according to a first embodiment of the present invention;
Fig. 4 is a block diagram of a decoder shown in Fig. 3;
Fig. 5 is a graph of acquired grayscale characteristics of an input device;
Fig. 6 is a graph of grayscale conversion characteristics of a grayscale conversion table according to the first embodiment;
Fig. 7 is a flowchart of a data embedding process performed by data embedding apparatus shown in Fig. 1;
Fig. 8 is a schematic of a grayscale conversion table according to a second embodiment of the present invention;
Fig. 9 is a functional block diagram of a data embedding apparatus according to a third embodiment of the present invention; and
Fig. 10 is a flowchart of the data embedding process performed by data embedding apparatus shown in Fig. 9.

Exemplary embodiments the present invention are explained in detail below with reference to the accompanying drawings.

In first, second and third embodiments explained below, it is assumed that image data is split into a plurality of blocks, and an average grayscale value of the grayscale values of all the pixels in each block is calculated as a feature quantity. Next, two adjoining blocks are treated as a block pair, a bit corresponding to a magnitude relation between the average grayscale values of the pair block is assigned to the pair block to generate a code, and the code is embedded into the image that is split into the blocks.

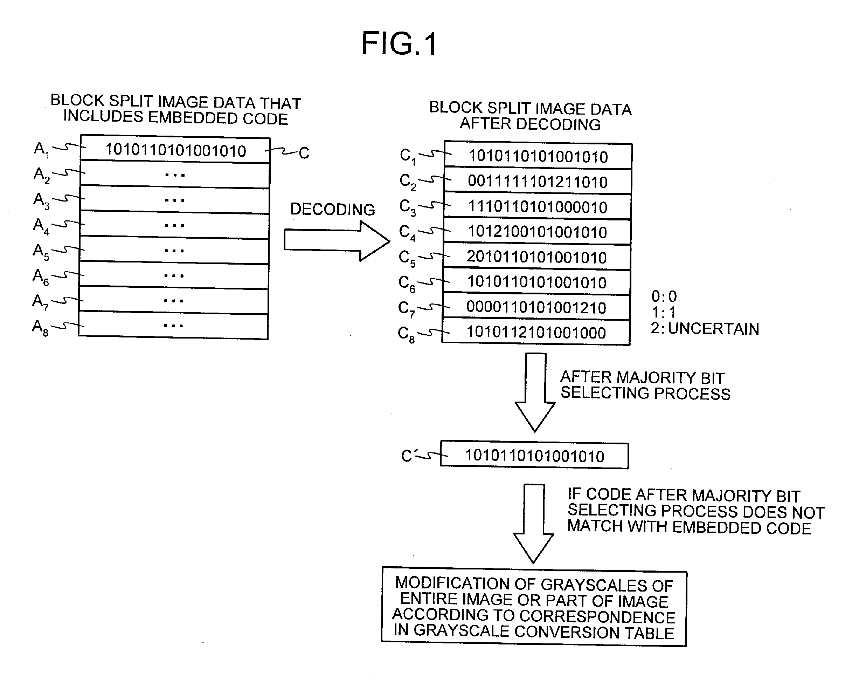

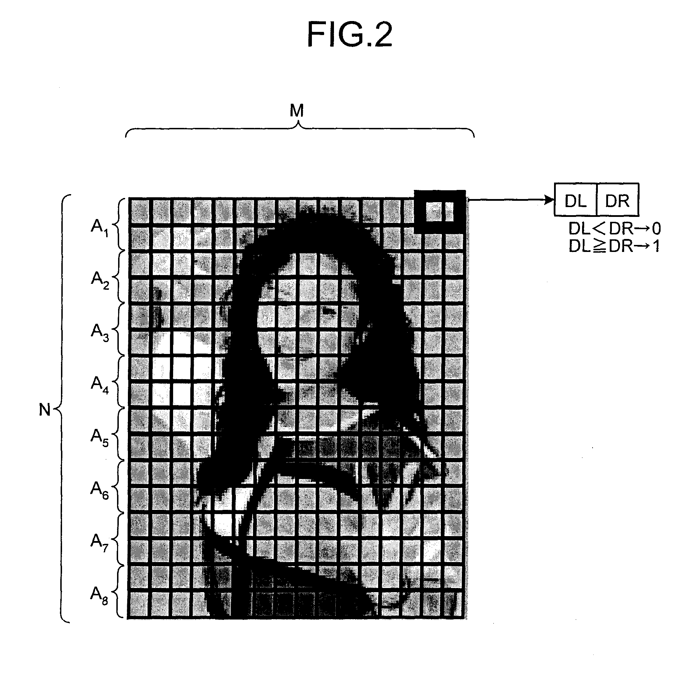

A salient feature of the present invention is explained first with reference to Figs. 1 and 2 before explaining the first, second and third embodiments. Fig. 1 is a schematic for explaining an overview and the salient feature of the present invention. As shown in Fig. 1, a 16-bit bit string "1010110101001010" is embedded as an embedded code C. Thus, block split image data includes the code C that is similarly embedded into embedding areas A₁ to A₈.

Upon decoding the block split image data, a code C₁ is generated from the code C that is embedded into the embedding area A₁. Similarly, a code C₂ is generated from the code C that is embedded into the embedding area A₂, a code C₃ is generated from the code C that is embedded into the embedding area A₃, a code C₄ is generated from the code C that is embedded into the embedding area A₄, a code C₅ is generated from the code C that is embedded into the embedding area A₅, a code C₆ is generated from the code C that is embedded into the embedding area A₆, a code C₇ is generated from the code C that is embedded into the embedding area A₇, and a code C₈ is generated from the code C that is embedded into the embedding area A₈. "2" appearing in the block split image data after decoding indicates that the bit is not determined as either "0" or "1".

By taking a majority bit from the bits in the same position of each embedding area of the block split image data after decoding, a single code C' is determined from the codes C₁ to C₈ that are 16-bit bit strings. If the code C' which is a 16-bit bit string matches with the code C that is the embedded code, embedding of the code C into the image is successful. However, if the code C' does not match with the code C, embedding of the code C into the image is a failure and the code C is not embedded normally into the image.

To overcome the above drawback, in embodiments of the present invention, the grayscales of the entire image or a portion of the image are modified according to a correspondence of grayscale conversion that is regulated by a grayscale conversion table. Next, the grayscales are extracted again from the image that includes the modified grayscales. Based on the extracted grayscales, a code to be embedded into the image is calculated and this code is embedded into the image. Due to this, even a code which is calculated from the grayscales and cannot normally be embedded due to grayscale characteristics, can be embedded into the image.

Fig. 2 is a schematic of the block split image data shown in Fig. 1. The image selected by the user is equally split into image areas (blocks) of M rows and N columns (In the example shown in Fig. 2, both M and N are equal to 16. Usually, M and N are even numbers) and two adjacent image areas in a horizontal axis direction of the image are treated as a block pair. In the example shown in Fig. 2, because the image includes sixteen image areas in the horizontal axis direction, eight block pairs are secured in the horizontal axis direction.

In a block pair, DL indicates a grayscale value of a left block and DR indicates a grayscale value of a right block. If DL<DR, the bit "0" is assigned to the block pair and if DL≥DR, the bit "1" is assigned to the block pair. Based on such rules, bits are assigned to the block pairs of the image area of top two rows in the image. The assigned bit string is the code C that is the embedded code in the image shown in Fig. 1.

As shown in Fig. 2, a single embedding area Aᵢ (1≤i≤8) includes the block pairs included in two adjacent rows in a vertical axis direction of the image. Further, one bit of the code C is embedded into a single image area corresponding to one block pair of the embedding area Aᵢ. Accordingly, eight embedding areas are secured in the image. Thus, the 16-bit code C is embedded into each embedding area Aᵢ and the code C is embedded eight times into the entire image. Further, each embedding area Aᵢ includes eight block pairs in a single row and sixteen block pairs in two rows.

A method to calculate the code C based on the grayscale values of the image is not to be thus limited, and any method can be used that calculates a predetermined code based on the bits assigned to all the block pairs or a part of the block pairs. Further, a determining method of the code C' is not to be thus limited.

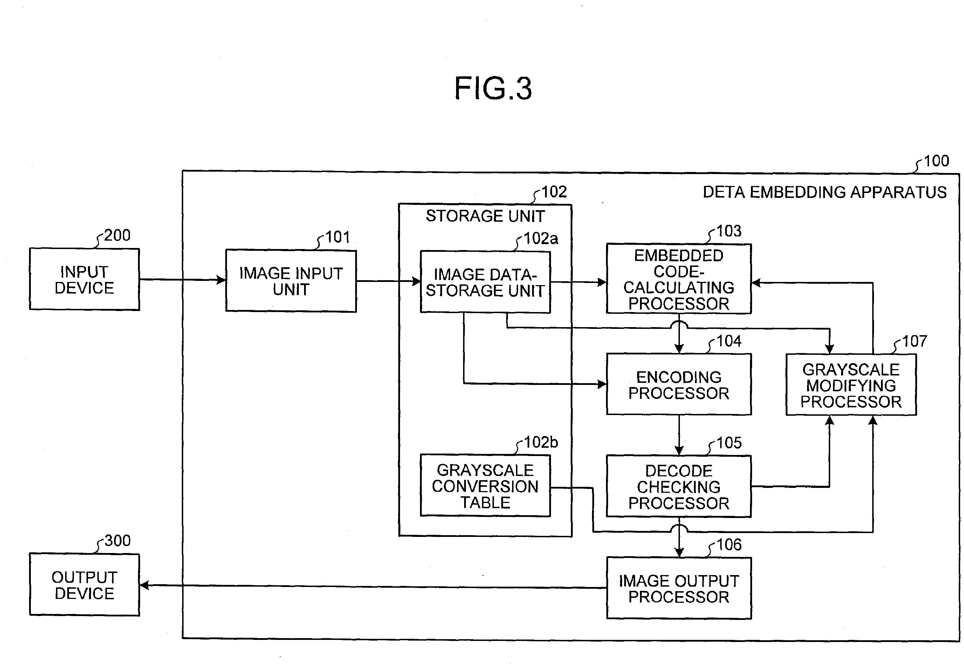

The first embodiment according to the present invention is explained below with reference to Figs. 2 to 6. A structure of a data embedding apparatus according to the first embodiment is explained first. Fig. 3 is a functional block diagram of the data embedding apparatus according to the first embodiment. As shown in Fig. 3, a data embedding apparatus 100 according to the first embodiment includes an image input unit 101, a storage unit 102, an embedded code-calculating processor 103, an encoding processor 104, a decode checking processor 105, an image output processor 106, and a grayscale modifying processor 107.

The image input unit 101 is an interface that receives an input of the image data from an input device 200 that is an external imaging device such as a Charge Coupled Device (CCD) camera that converts an input image into the image data. The image input unit 101 carries out a process to transfer to the storage unit 102, the image data that is transferred from the input device 200. Further, the image data is not to be limited to an image taken by the CCD, and can also include a natural image, an image that is taken and trimmed by a cameraman, and an artificial image such as a logo. In other words, the input image can be any image that is provided as a digital image.

The storage unit 102 further includes an image data-storage unit 102a and a grayscale conversion table 102b. The image data-storage unit 102a stores therein the image data that is transferred from the image input unit 101. Further, the grayscale conversion table 102b stores therein a one to one correspondence established between the grayscales before conversion and the grayscales after conversion.

As shown in Fig. 2, the embedded code-calculating processor 103 splits the image data stored in the image data-storage unit 102a into the image areas of M rows and N lines. Based on the magnitude relation between the grayscale values of the left block and the right block of the adjoining pair of blocks in a horizontal direction, the embedded code-calculating processor 103 calculates the corresponding bit, and assigns the bits to the block pairs of the image areas of the top two rows in the image to calculate the code C that is the embedded code into the image. The embedded code-calculating processor 103 transfers the code C to the encoding processor 104.

The encoding processor 104 embeds into the image data that is stored in the image data-storage unit 102a, the code C that is calculated by the embedded code-calculating processor 103. In an embedding process, the encoding processor 104 sequentially embeds a single bit of the code C from the first bit to the eighth bit into a single block pair starting from the block pair at the extreme left of an odd numbered row of the image. Further, the encoding processor 104 sequentially embeds a single bit of the code C from the ninth bit to the sixteenth bit into a single block pair starting from the block pair at the extreme left of an even numbered row that continues after the next odd numbered row.

The decode checking processor 105 decodes the code C' from the image that includes the code C embedded by the encoding processor 104 and determines whether the decoded code C' matches with the code C. If the code C' matches with the code C, the decode checking processor 105 instructs the image output processor 106 to carry out an image output process. If the code C' does not match with the code C, the decode checking processor 105 instructs the grayscale modifying processor 107 to carry out a grayscale modifying process.

The image output processor 106 instructs an output device 300, which is an external device in the form of a display device such as a display or a printing device such as a printer that outputs the image based on the image data, to output the image data.

Based on the instruction from the decode checking processor 105, the grayscale modifying processor 107, which is a grayscale-converting filter, refers to the grayscale conversion table 102b, operates the image data that is stored in the image data storage unit 102a, and modifies all the grayscales or a part of the grayscales of the image. The image data of the image, that includes the grayscales modified by the grayscale modifying processor 107, is transferred to the embedded code-calculating processor 103 and a string of processes such as an embedded code calculating process, an encoding process, and a decode checking process are executed again.

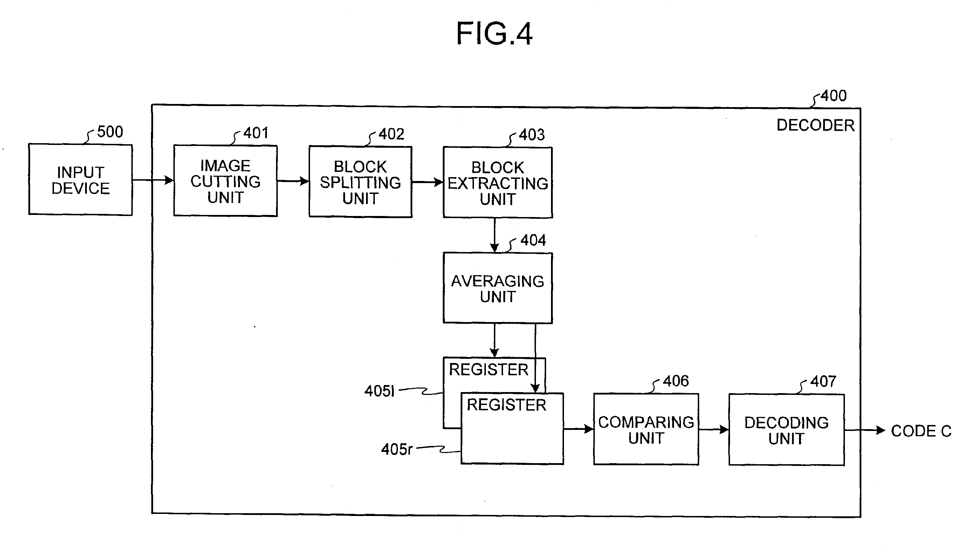

A structure of a decoder, which decodes data from the image that includes the embedded data, is explained next. Fig. 4 is a block diagram of the decoder according to the present invention. A decoder 400 decodes the embedded code C from the image data that includes the code C embedded by the data embedding apparatus 100 or by a commonly used data embedding apparatus (encoder).

If image data (for example, a blank portion) is included around the embedded code of the image data that is read by an input device 500, an image cutting unit 401 of the decoder 400 includes a function to cut the valid embedded code from the entire image data. However, cutting is not carried out if only the embedded code is input into the image cutting unit 401.

Similarly in the block split image data shown in Fig. 2, a block splitting unit 402 splits the embedded code from the image cutting unit 401 into blocks of N rows and M lines (16 rows and 16 columns in the example shown in Fig. 2) and outputs the split embedded code as block split image data (not shown in Fig. 4).

According to a bit shift of the decoded code (16-bit code), a block extracting unit 403 sequentially extracts the block pairs (two blocks) from the block split image data and sequentially outputs a density distribution of the block pair (two blocks) as block density data (not shown in Fig. 4).

Based on the block density data, an averaging unit 404 calculates left average density data (not shown in Fig. 4) corresponding to one block in the block pair and right average density data (not shown in Fig. 4) corresponding to the other block. According to the bit shift of the code, the averaging unit 404 sequentially stores the left average density data and the right average density data in a register 4051 and a register 405r.

A comparing unit 406 compares the magnitude relation between the left average density data and the right average density data that are stored in the register 4051 and the register 405r to carry out bit determination and outputs to a decoding unit 407, a cluster of the codes C₁ to C₈ corresponding to a bit determination result (based on a relational expression mentioned earlier, bits are determined as "0" or "1").

Each of the candidate codes C₁ to C₈ shown in Fig. 1 is a 16-bit code. The codes C₁ to C₈ are a result of decoding of each code (16-bit code) that is embedded into the areas A₁ to A₈ of the encoded data (see Fig. 2). The codes C₁ to C₈ are candidates for the code C' (see Fig. 1) as a decoding result of the decoder 400. In each of the candidate codes C₁ to C₈, "2" represents a bit for which the bit determination of "1" or "0" is uncertain.

As shown in Fig. 1, based on the candidate codes C₁ to C₈ corresponding to a comparison result of the comparing unit 406, the decoding unit 407 selects the majority bit in a bit unit (a bit string in a vertical direction in the example shown in Fig. 1), confirms each bit (a total of 16 bits), and outputs the resulting code C' as the decoding result of the decoder 400.

All the components of the decoder 400 are interconnected via controller that is not shown.

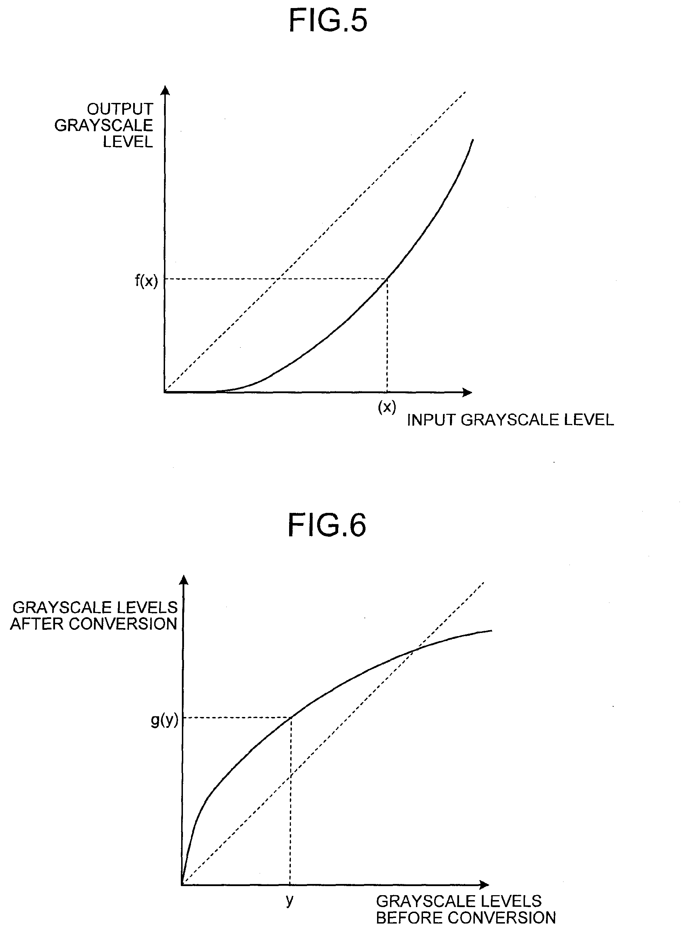

Acquired grayscale characteristics of the decoder shown in Fig. 4 are explained next. Fig. 5 is a graph of the acquired grayscale characteristics of the input device 500 that inputs the embedded code into the decoder 400 shown in Fig. 4. Originally, input grayscale levels (input grayscale values) into the input device 500 and output grayscale levels (output grayscale values) from the input device 500 need to match. However, as shown in Fig. 5, the input grayscale levels and the output grayscale levels do not match due to device characteristics of the input device 500. If x denotes the input grayscale levels and f (x) denotes the output grayscale levels from the input device 500, although originally f (x) needs to be equal to x, in the example shown in Fig. 5, f (x) is less than x due to the device characteristics of the input device 500. In other words, the input device 500 includes the device characteristics that acquire low grayscale values.

However, due to the device characteristics of the input device 500, even if the embedded code is decoded from the image that includes the embedded code that is calculated based on the acquired grayscale values, the embedded code cannot be decoded normally. The present invention is carried out to overcome such a drawback. In other words, as shown in Fig. 6, grayscale conversion characteristics of the grayscale conversion table according to the first embodiment are fixed such that if y indicates the grayscale levels before conversion (grayscale values before conversion) and g (y) indicates the grayscale levels after conversion (grayscale values after conversion), g (y) is greater than y. Similarly, if x indicates the input grayscale levels and f (x) indicates the output grayscale levels from the input device 500, g (f (x)) becomes equal to x. Thus, even if the grayscale values cannot be accurately acquired due to the device characteristics of the input device 500 and a normally decodable embedded code cannot be calculated, modifying and correcting the acquired grayscale values enables a normally decodable embedded code to be calculated.

The grayscale conversion characteristics shown in Fig. 6 are stored in the grayscale conversion table 102b as one to one correspondence between the grayscale levels before conversion and the grayscale levels after conversion. The grayscale conversion table 102b based on the grayscale conversion characteristics shown in Fig. 6 is a conversion table for carrying out grayscale conversion of a one-dimensional monotone image.

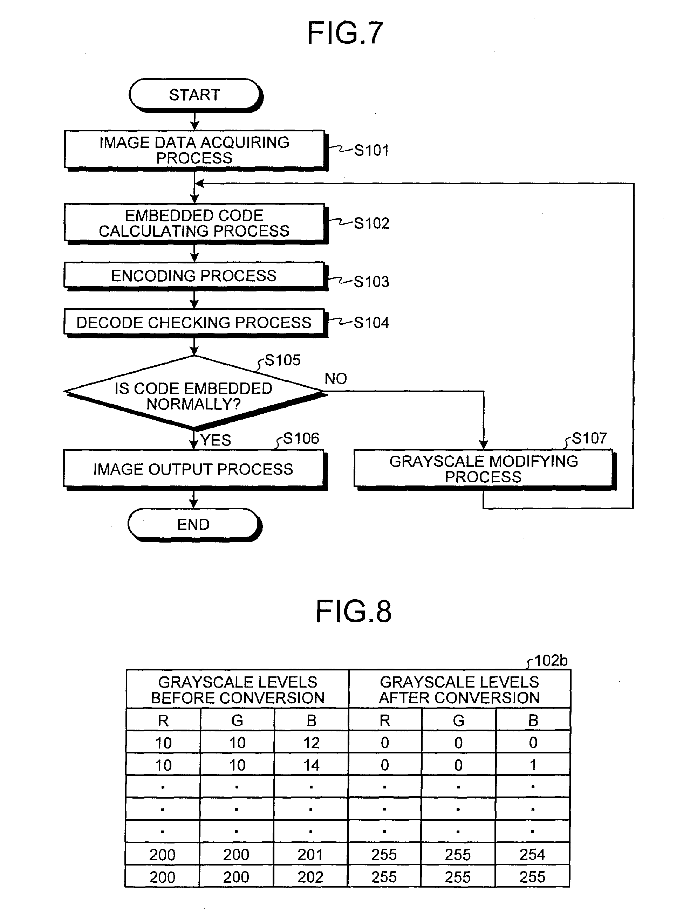

A data embedding process in the data embedding apparatus according to the first embodiment is explained next. Fig. 7 is a flowchart of the data embedding process in the data embedding apparatus according to the first embodiment. As shown in Fig. 7, first, the data embedding apparatus 100 stores in the image data-storage unit 102a via the image input unit 101, the image data of the image that is acquired by the input device 200 (hereinafter, "image data acquiring process" (step S101)).

Next, the embedded code-calculating processor 103 executes the embedded code calculating process (step S102). To be specific, the embedded code-calculating processor 103 splits the image data into the image areas of M rows and N columns and assigns the bits based on the grayscale values of the right blocks and the left blocks in the block pairs of the image areas of the top two rows in the image. The embedded code thus calculated is the code C.

Next, the encoding processor 104 embeds in block pair units, into the image data stored in the image data-storage unit 102a, the code C that is calculated by the embedded code-calculating processor 103 (hereinafter, "encoding process" (step S103)).

Next, the decode checking processor 105 decodes the code C' from the image that includes the code C that is embedded by the encoding processor 104 and determines whether the decoded code C' matches with the code C (hereinafter, "decode checking process" (step S104)). If the code C' matches with the code C ("Yes" at step S105), the image output processor 106 instructs the output device 300 to output the image data (step S106).

However, if the code C' does not match with the code C ("No" at step S105), the grayscale modifying processor 107 refers to the grayscale conversion table 102b, operates the image data stored in the image data-storage unit 102a, and modifies the grayscales of the entire image or a part of the image (step S107). After step S107 has ended, the data embedding process moves to step S102.

The second embodiment according to the present invention is explained below with reference to Fig. 8. In the second embodiment, because the structure, functions, and processes of the data embedding apparatus 100 are similar to the structure, the functions, and the processes of the data embedding apparatus 100 according to the first embodiment, a detailed explanation is omitted unless otherwise specified. Instead of the one-dimensional grayscale conversion table in the form of the grayscale conversion table 102b that is used in the first embodiment, in a grayscale conversion table used in the second embodiment, a three-dimensional to three-dimensional correspondence is established between the grayscales that are expressed in three dimensions of Red, Green, and Blue (RGB) that are the three primary colors of light. Further, RGB grayscale conversion is optimum if the output device 300 is a display device such as a display.

If the output device 300 is a printing device such as a printer, grayscale conversion is optimum when carried out by converting the grayscales according to a four-dimensional to four-dimensional correspondence between the grayscales that are represented by four dimensions of Cyan, Magenta, Yellow, and Black (CMYK). Thus, based on whether the output device 300 is a display device or a printing device, switching to RGB grayscale conversion or CMYK grayscale conversion enables optimum grayscale conversion to be carried out. Further, because CMYK grayscale conversion is the same as RGB grayscale conversion in principle, an explanation is omitted. Even a method in which the grayscales are represented by three dimensions of YUV (Y indicates a luminance signal, U indicates a difference between the luminance signal and a blue color component, and V indicates a difference between the luminance signal and a red color component) is basically similar to RGB grayscale conversion.

As shown in Fig. 8, a one to one correspondence is established between three-dimensional grayscale levels before conversion, that are based on a combination of the grayscale values of each component of RGB, and three-dimensional grayscale levels after conversion that are similarly based on a combination of the grayscale values of each component of RGB. Each component of RGB in the grayscale levels before conversion and the grayscale levels after conversion is 8-bit data. Similarly as in the first embodiment, treating the grayscale levels after conversion as the input grayscale levels and the grayscale levels before conversion as the output grayscale levels enables the grayscale characteristics of the input device 200 to be acquired.

In grayscale conversion based on the grayscale conversion table shown in Fig. 8, the grayscale values of "B" component of RGB are taken as standard to carry out grayscale conversion. Taking the grayscale values of "B" component as standard is merely one example of grayscale conversion, and grayscale conversion can also be carried out by taking the grayscale values of "R" component or "G" component as standard. Further, a random combination of the grayscale values of RGB can also be taken as standard to carry out grayscale conversion.

For example, it is assumed that original grayscale values of each "B" component of the block pairs in the image are (20,20). Further, it is assumed that grayscale values of (35,5) are desirable after embedding of the embedded code by encoding but the grayscale values after decoding become (19,19). If the grayscale values become (19,19), a grayscale difference such as the grayscale difference when the grayscale values are (35,5) cannot be obtained, thus indicating that the embedded code is not embedded normally.

To ensure that the magnitude relation between the grayscale values in the block pairs is similar to the grayscale values (35,5), for example, the grayscale modifying processor 107 refers to a grayscale component of "B" of the grayscale levels before conversion in the grayscale conversion table shown in Fig. 8 and acquires the grayscale levels after conversion that include "25" and "19" as the grayscale values of "B" such that the decoded grayscale values become (25,19). "40" is acquired as the grayscale level after conversion to ensure the grayscale value of "25" for "B" and "5" is acquired as the grayscale value after conversion to ensure the grayscale value of "19" for "B". In other words, acquiring (40,5) as the grayscale values of each "B" component of the block pairs in the image before embedding of the embedded code by encoding enables an accurate magnitude relation between the block pairs using decoding to be obtained, even after embedding of the embedded code by encoding. Therefore, the embedded code is embedded normally.

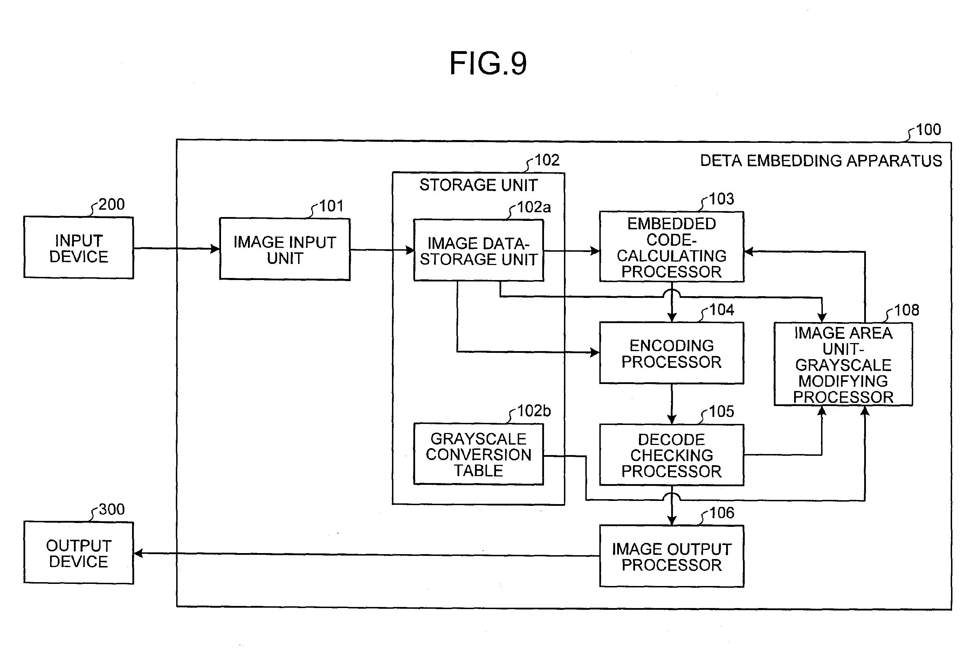

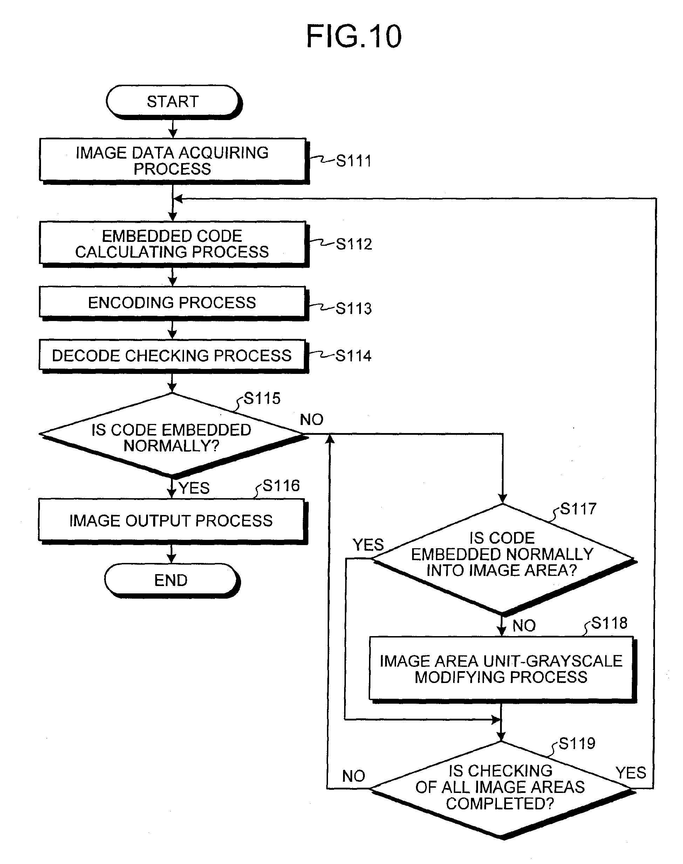

The third embodiment according to the present invention is explained below with reference to Figs. 9 and 10. In the third embodiment, because the structure, functions, and processes of the data embedding apparatus 100 are similar to the structure, the functions, and the processes of the data embedding apparatus 100 according to the first and the second embodiments, a detailed explanation is omitted unless otherwise specified. In the third embodiment, the image is split into multiple image areas (for example, block pairs) and the decode checking process is carried out to check each image area unit to determine whether the code C that is the embedded code is embedded normally. Grayscale conversion is carried out to convert the grayscales of only the image areas in which the code C is not embedded normally. A conversion method explained in the first or the second embodiments is used to carry out grayscale conversion.

The structure of the data embedding apparatus according to the third embodiment is explained first. Fig. 9 is a functional block diagram of the data embedding apparatus according to the third embodiment. As shown in Fig. 9, the data embedding apparatus 100 according to the third embodiment includes the image input unit 101, the storage unit 102, the embedded code-calculating processor 103, the encoding processor 104, the decode checking processor 105, the image output processor 106, and an image area unit-grayscale modifying processor 108.

The image data-storage unit 102a of the storage unit 102 stores therein the image data for each image area unit. Further, the decode checking processor 105 outputs a decode checking result for each image area unit. The decode checking processor 105 verifies the decode checking result for each image area unit (determines whether the code C is embedded normally into each image area unit).

Based on an instruction from the decode checking processor 105, the image area unit-grayscale modifying processor 108 refers to the grayscale conversion table 102b, based on the decode checking result, operates the image data (stored in the image data-storage unit 102a) of the image areas in which the embedded code is not encoded normally, and carries out a process to modify the grayscales of the image areas.

The image data, which includes the grayscales that are modified by the image area unit-grayscale modifying processor 108, is transferred to the embedded code-calculating processor 103. After the decode checking processor 105 has completed verifying the decode checking results of all the image areas, the embedded code-calculating processor 103, the encoding processor 104, and the decode checking processor 105 once again carry out the string of processes that include the embedded code calculating process, the encoding process, and the decode checking process.

The data embedding process performed by the data embedding apparatus according to the third embodiment is explained next. Fig. 10 is a flowchart of the data embedding process performed by the data embedding apparatus according to the third embodiment. As shown in Fig. 10, first, the data embedding apparatus 100 stores in the image data-storage unit 102a via the image input unit 101, the image data of the image that is acquired by the input device 200 (hereinafter, "image data acquiring process" (step S111)).

Next, the embedded code-calculating processor 103 executes the embedded code calculating process (step S112). To be specific, the embedded code-calculating processor 103 splits the image data into the image areas of M rows and N columns and assigns the bits based on the grayscale values of the right blocks and the left blocks in the block pairs of the image areas of the top two rows in the image. The embedded code thus calculated is the code C.

Next, the encoding processor 104 embeds in block pair units, into the image data stored in the image data-storage unit 102a, the code C that is calculated by the embedded code-calculating processor 103 (hereinafter, "encoding process" (step S113)).

Next, the decode checking processor 105 decodes the code C' from the image that includes the code C embedded by the encoding processor 104 and determines whether the decoded code C' matches with the code C (step S114). If the code C' matches with the code C ("Yes" at step S115), the image output processor 106 instructs the output device 300 to output the image data (step S116).

However, if the code C' does not match with the code C ("No" at step S115), the decode checking processor 105 verifies the decode checking result of each image area unit and determines whether the code C is embedded normally into the image area (step S117).

If the code C is embedded normally into the image area ("Yes" at step S117), the data embedding process moves to step S119. If the code C is not embedded normally into the image area ("No" at step S117), the image area unit-grayscale modifying processor 108 refers to the grayscale conversion table 102b, operates the image data stored in the image data-storage unit 102a, and modifies the grayscales of the image area (step S118).

At step S119, the decode checking processor 105 determines whether the verification of the decode checking results of all the image areas is completed. If the verification of the decode checking results of all the image areas is completed ("Yes" at step S119), the data embedding process moves to step S112. If the verification of the decode checking results of all the image areas is not completed ("No" at step S119), the data embedding process moves to step S117.

The present invention is explained with reference to the first to the third embodiments. However, the invention in its broader aspects is not limited to the specific details and representative embodiments shown and described herein. Accordingly, various modifications may be made without departing from the scope of the general inventive concept as defined by the appended claims and their equivalents. Further, the effects described in the embodiments are not to be thus limited.

The sequence of processes, the sequence of controls, specific names, and data including various parameters can be changed as required unless otherwise specified.

The constituent elements of the device illustrated are merely conceptual and may not necessarily physically resemble the structures shown in the drawings. For instance, the device need not necessarily have the structure that is illustrated. The device as a whole or in parts can be broken down or integrated either functionally or physically in accordance with the load or how the device is to be used.

The process functions performed by the apparatus are entirely or partially realized by a Central Processing Unit (CPU) (or a Micro Processing Unit (MPU), a Micro Controller Unit (MCU) etc.) or a computer program executed by the CPU (or the MPU, the MCU etc.) or by a hardware using wired logic.

All the automatic processes explained in the first to the third embodiments can be, entirely or in part, carried out manually. Similarly, all the manual processes explained in the first to the third embodiments can be entirely or in part carried out automatically by a known method. The sequence of processes, the sequence of controls, specific names, and data including various parameters explained in the first to the third embodiments can be changed as required unless otherwise specified.

According to the present invention, if a code is not able to be embedded normally, a feature quantity of an image is modified and the code based on the feature quantity of the image is embedded again. Due to this, the code can be reliably embedded into the image and a scope of types of the images that enable embedding of the code can be widened.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A data embedding apparatus that embeds data into an image, the data embedding apparatus comprising:
a code calculating unit that extracts a feature quantity from the image and calculates a code by using the extracted feature quantity;
a code embedding unit that embeds the calculated code into the image;
an embedding determining unit that determines whether the code has been embedded normally into the image;
an image-feature-quantity modifying unit that modifies the extracted feature quantity upon the embedding determining unit determining that the code has not been embedded normally into the image, wherein
the code calculating unit extracts a new feature quantity from the image based on the modified feature quantity, and recalculates a code by using the new feature quantity.

2. The data embedding apparatus according to claim 1, wherein the image-feature-quantity modifying unit is a grayscale-converting filter that modifies grayscales of the image.

3. The data embedding apparatus according to claim 2, wherein the grayscale-converting filter includes, a table that stores therein a correspondence of grayscales that are expressed by a plurality of elements, and modifies the grayscales of the image according to the correspondence of grayscales that is stored in the table.

4. The data embedding apparatus according to claim 2 or 3, wherein the grayscale-converting filter modifies, according to characteristics of grayscales, included in image data that is acquired by an imaging device that converts an input image into the image data, with respect to grayscales of the input image, the grayscales of the image.

5. The data embedding apparatus according to any preceding claim, further comprising an image area-splitting unit that splits the image into a plurality of image areas, wherein
the embedding determining unit determines, for each image area, whether the code is embedded normally into the image area by the code embedding unit, and
the image-feature-quantity modifying unit modifies the extracted feature quantity upon the embedding determining unit determining that the code is not embedded normally into the image area.

6. A data embedded-printing material that includes an image wherein the code is embedded by the data embedding apparatus according to any preceding claim.

7. A method of embedding data into an image, the method of embedding data comprising:
extracting a feature quantity from the image;
calculating a code by using the extracted feature quantity;
embedding the calculated code into the image;
determining whether the code has been embedded normally into the image;
modifying the extracted feature quantity upon it being determined that the code has not been embedded normally into the image;
extracting a new feature quantity from the image based on the modified feature quantity; and
recalculating a code by using the new feature quantity.

8. The method according to claim 7, wherein the modifying includes modifying grayscales of the image.

9. The method according to claim 8, wherein the modifying includes modifying the grayscales of the image, according to a correspondence in a table that stores therein the correspondence of grayscales that are expressed by a plurality of elements.

10. The method according to claim 8 or 9, wherein the modifying includes modifying the grayscales of the image, according to characteristics of grayscales, included in image data that is acquired by an imaging device that converts an input image into the image data, with respect to grayscales of the input image.

11. The method according to any of claims 7 to 10, further comprising splitting the image into a plurality of image areas, wherein
the determining includes determining, for each image area, whether the code is embedded normally into the image area, and
the modifying includes modifying the extracted feature quantity upon it is determined at the determining that the code is not embedded normally into the image area.

12. A computer program that causes a computer to embed data into an image, the computer program causing the computer to execute:
extracting a feature quantity from the image;
calculating a code by using extracted feature quantity;
embedding the calculated code into the image;
determining whether the code has been embedded normally into the image;
modifying the extracted feature quantity upon it being determined that the code has not been embedded normally into the image;
extracting a new feature quantity from the image based on modified feature quantity; and
recalculating a code by using the new feature quantity.

13. The computer program according to claim 12, wherein the modifying includes modifying grayscales of the image.

14. The computer program according to claim 13, wherein the modifying includes modifying the grayscales of the image, according to a correspondence in a table that stores therein the correspondence of grayscales that are expressed by a plurality of elements.

15. The computer program according to claim 13 or 14, wherein the modifying includes modifying the grayscales of the image, according to characteristics of grayscales, included in image data that is acquired by an imaging device that converts an input image into the image data, with respect to grayscales of the input image.

16. The computer program according to any of claims 12 to 15, wherein the computer program further causes the computer to execute splitting the image into a plurality of image areas, wherein
the determining includes determining, for each image area, whether the code is embedded normally into the image area, and
the modifying includes modifying the extracted feature quantity upon it is determined at the determining that the code is not embedded normally into the image area.
